(19) Europäisches Patentamt
European Patent Office
Office européen des brevets

(11) EP 3 908 461 B1

(12) # EUROPÄISCHE PATENTSCHRIFT

(45) Veröffentlichungstag und Bekanntmachung des Hinweises auf die Patenterteilung:
**14.08.2024 Patentblatt 2024/33**

(21) Anmeldenummer: **19829587.5**

(22) Anmeldetag: **20.12.2019**

(51) Internationale Patentklassifikation (IPC):
***B32B 37/12*** *(2006.01)* ***C09J 133/04*** *(2006.01)*
***C09J 175/04*** *(2006.01)*

(52) Gemeinsame Patentklassifikation (CPC):
(C-Sets verfügbar)
**B32B 37/12; B32B 37/1284; C08F 220/1804; C08G 18/0823; C08G 18/0828; C08G 18/42; C08G 18/44; C08G 18/4825; C08G 18/73; C08G 18/755; C08G 18/7621; C08G 18/765; C09J 133/06; C09J 175/04;** B32B 38/145; (Forts.)

(86) Internationale Anmeldenummer:
**PCT/EP2019/086574**

(87) Internationale Veröffentlichungsnummer:
**WO 2020/144052 (16.07.2020 Gazette 2020/29)**

(54) **VERFAHREN ZUR FOLIENBESCHICHTUNG MIT GRAVURWALZENSYSTEM**

FILM COATING METHOD USING GRAVURE CYLINDER SYSTEM

PROCÉDÉ DE REVÊTEMENT PAR UNE FEUILLE AU MOYEN D’UN SYSTÈME DE CYLINDRE DE GRAVURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2019 EP 19151452**

(43) Veröffentlichungstag der Anmeldung:
**17.11.2021 Patentblatt 2021/46**

(73) Patentinhaber: **BASF SE**
**67056 Ludwigshafen am Rhein (DE)**

(72) Erfinder:
- **SCHUMACHER, Karl-Heinz**
**67056 Ludwigshafen (DE)**
- **HOEVEL, Bernd**
**67056 Ludwigshafen (DE)**

(74) Vertreter: **BASF IP Association**
**BASF SE**
**GBI-C006**
**67056 Ludwigshafen (DE)**

(56) Entgegenhaltungen:
**DE-A1- 10 308 106**
**JP-A- 2016 203 119**
**US-A1- 2014 000 806**
**US-A1- 2015 064 433**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 908 461 B1

(52) Gemeinsame Patentklassifikation (CPC): (Forts.)
B32B 2307/412; C08G 2170/80

C-Sets
**C08F 220/1804, C08F 212/08, C08F 220/06;**
**C08F 220/1804, C08F 220/06, C08F 220/14;**
**C09J 175/04, C08L 71/02**

## Beschreibung

Die Erfindung betrifft ein Verfahren zur Folienkaschierung, wobei ein wässriger Laminierklebstoff mittels eines Gravurwalzensystem auf eine Trägerfolie aufgetragen wird (direct gravure coating system), wobei die Trägerfolie und/oder ein optionales Substrat vorzugsweise transparent sind, und der wässrige Laminierklebstoff ein in der wässrigen Phase dispergiertes Klebstoffpolymer und ein in der wässrigen Phase gelöstes Polyalkylenglykol, ausgewählt aus Polethylenglykol und Polypropylenglykol enthält.

Dispergierte Klebstoffpolymere enthaltende wässerige Laminierklebstoffe werden mittels geeigneter Auftragssysteme auf Trägerfolien aufgetragen und sollen, insbesondere wenn die Trägerfolien transparent sind, ein optisch störungsfreies klares Beschichtungsbild ergeben. Wässrige Klebstoffe für Kaschieranwendungen sind z.B. beschrieben in WO 98/23656, WO 00/50480 und WO 2017/102497. Als Auftragssystem sind Gravurwalzensysteme weit verbreitet, bei denen sich die zu beschichtende Trägerfolie zwischen zwei Walzen bewegt, welche sich in der Richtung der sich bewegenden Bahn drehen (sogenanntes direct gravure coating system). Eine dieser Walzen ist eine Walze (z.B. aus Stahl) mit einer Gravur, mittels der der Laminierklebstoff auf den Trägerfilm aufgetragen wird. Die zweite Walze ist üblicherweise eine Gummiwalze (sogenannte Presseurwalze).

Nach der Beschichtung der Trägerfolie (Primärfolie) mit dem wässrigen Laminierklebstoff läuft diese in einen Trockner, um das Wasser aus dem Klebstoff zu verdampfen. Anschließend wird ein zweites Substrat (z.B. eine zweite Folie (Sekundärfolie) zur Herstellung von Verbundfolien oder Papier bzw. bedruckte oder unbedruckte Kartons zur Herstellung von Folien/Papierlaminaten mittels eines Kalanders unter erhöhter Temperatur und Druck zukaschiert. Bei Anwendung der beschriebenen Beschichtungstechnologie erfährt die Klebstoffschicht bei der Auftragung im Walzenspalt mechanische Kräfte, die zu einer mehr oder weniger unruhigen Oberfläche der noch flüssigen Klebstoffschicht beim Verlassen des Walzenspaltes führen. Glättet sich diese Oberflächenstruktur der flüssigen Klebstoffschicht auf dem Weg in den Trockner nicht, wird diese Struktur im Trockner fixiert. Handelt es sich bei der Primärfolie um eine transparente Folie oder wird eine transparente Sekundärfolie zukaschiert, werden diese Oberflächenstrukturen des Klebstoffs im resultierenden Folienlaminat als Störung sichtbar, das Laminat wirkt trüb und lässt die angestrebte Klarheit vermissen. Auch bei vollständig bedruckten (d.h. nicht transparenten) Folien kann sich diese unerwünschte Struktur im Klebstoff als Störung des Druckbildes sichtbar machen.

Mechanisch kann dieses Problem der ausreichenden Glättung des Klebstofffilms vor dem Trocknen gelöst werden, indem ein Glättungsstab (smoothing bar) den nassen Klebstofffilm glättet. Allerdings besteht bei Anwendung eines solchen Glättungsstabs die Gefahr, dass Klebstoffreste auf dem Glättungsstab antrocknen und zu Beschichtungsstörungen führen. Dies kann insbesondere passieren, wenn die Beschichtungsanlage z.B. aufgrund technischer Störungen angehalten wird.

JP 2016-203119 A beschreibt eine Walzenbeschichtungsvorrichtung zur Vermeidung, dass ein Zellenmuster auf einer Beschichtungsoberfläche verbleibt.

Die Aufgabe bestand darin, ein Verfahren zur maschinellen Beschichtung von Folien mit wässrigen Klebstoffdispersionen zur Verfügung zu stellen, bei dem auch ohne Einsatz eines Glättungsstabs eine möglichst schnelle Glättung des nassen Klebstofffilms erfolgt, bevor die Folienbahn den Trockner erreicht und möglichst störungsfreie, optisch klare Beschichtungen erzielt werden bei Verwendung von vorzugsweise transparenten Folien als Primär- und/oder Sekundärfolie.

Es wurde nun gefunden, dass durch Zusatz bestimmter Additive zum wässrigen Laminierklebstoff Störungen des Beschichtungsbildes vermieden werden können, ohne eine Glättungswalze einsetzen zu müssen. Geeignete Additive sind in der wässrigen Phase gelöste Polyalkylenglykole, ausgewählt aus Polethylenglykol, Polypropylenglykol und deren Mischung.

Gegenstand der Erfindung ist ein Verfahren zur Folienkaschierung, wobei ein wässriger Laminierklebstoff mittels eines Auftragsystems auf eine Trägerfolie aufgetragen wird,

wobei das Auftragsystem ein Gravurwalzensystem ist, bei dem sich die zu beschichtende Trägerfolie zwischen zwei Walzen bewegt, die sich in der Richtung der sich bewegenden Trägerfolienbahn drehen (sogenanntes direct gravure coating system), wobei eine der Walzen eine Gravurwalze ist und der Laminierklebstoff von der Gravurwalze auf die Trägerfolie aufgetragen wird,
wobei die mit Klebstoff beschichtete Trägerfolie (Primärfolie) optional mit einem weiteren Substrat verklebt wird, wobei die Trägerfolie und/oder das optionale Substrat (z.B. eine Sekundärfolie) bevorzugt transparent oder bedruckt sind,
wobei der wässrige Laminierklebstoff (a) mindestens ein in der wässrigen Phase dispergiertes Klebstoffpolymer und (b) mindestens ein in der wässrigen Phase gelöstes Polyalkylenglykol, ausgewählt aus Polyethylenglykol, Polypropylenglykol und deren Mischung, enthält,
dadurch gekennzeichnet, dass
das Polyethylenglykol ein mittleres Molekulargewicht von 300 und bis zu 1500 hat und das Polypropylenglykol ein

mittleres Molekulargewicht von 300 und bis zu 2000 hat und die Molekulargewichte berechnet sind aus der OH-Zahl gemäß DIN 53240-3:2016-03.

Gegenstand der Erfindung ist auch die Verwendung mindestens eines Polyalkylenglykols, ausgewählt aus Polyethylenglykol eines Molekulargewichts von 300 und bis zu 1500, vorzugsweise von 300 bis 600, und Polypropylenglykol eines Molekulargewichts von 300 und bis zu 2000, vorzugsweise von 300 bis 600, bei der Herstellung von mit einem wässrigen Laminierklebstoff mittels eines Auftragsystems beschichteten Trägerfolien, wobei das Auftragsystem ein Gravurwalzensystem ist, bei dem sich die zu beschichtende Trägerfolie zwischen zwei Walzen bewegt, die sich in der Richtung der sich bewegenden Trägerfolienbahn drehen (direct gravure coating system), wobei eine der Walzen eine Gravurwalze ist und der Laminierklebstoff von der Gravurwalze auf die Trägerfolie aufgetragen wird,
wobei die mit Klebstoff beschichtete Trägerfolie optional mit einem weiteren Substrat verklebt wird, wobei die Trägerfolie und/oder das optionale Substrat bevorzugt transparent oder bedruckt sind. Die Molekulargewichte sind mittlere Molekulargewichte, berechnet aus der OH-Zahl gemäß DIN 53240-3:2016-03.

Im Folgenden werden gelegentlich die Bezeichnung "(Meth)acryl..." und ähnliche Bezeichnungen als abkürzende Schreibweise verwendet für "Acryl... oder Methacryl... ". In der Bezeichnung Cx-Alkyl(meth)acrylat und analogen Bezeichnungen bedeutet x die Anzahl der C-Atome der Alkylgruppe.

Die Glasübergangstemperatur wird durch Differential Scanning Calorimetrie (ASTM D 3418-08, sogenannte "midpoint temperature") bestimmt werden. Die Glasübergangstemperatur des Polymerisats der Polymerdispersion ist die bei Auswertung der zweiten Heizkurve (Heizrate 20° C/min) erhaltene Glasübergangstemperatur.

Der wässrige Laminierklebstoff enthält vorzugsweise

(i) von 30 bis 60 Gew.%, besonders bevorzugt von 40 bis 55 Gew.% des mindestens einen Klebstoffpolymers und
(ii) von 0,25 bis 3 Gew.%, besonders bevorzugt von 0,5 bis 1,5 Gew.% des mindestens einen in der wässrigen Phase gelösten Polyalkylenglykols; und optional weitere Bestandteile.

Der wässrige Laminierklebstoff enthält mindestens ein Polyalkylenglykol. Bei dem Polyalkylenglykol handelt es sich entweder um das Homopolymer Polyethylenglykol oder um das Homopolymer Polypropylenglykol. Es kann auch ein Gemisch dieser beiden Homopolymere eingesetzt werden. Die Polyalkylenglykole liegen in der wässrigen Laminierklebstoffzusammensetzung gelöst vor. Sie haben eine Wasserlöslichkeit von vorzugsweise mindestens10 g/l, und sind bevorzugt in jedem Mischungsverhältnis vollständig löslich in der Wasserphase.

Das Polyethylenglykol hat ein mittleres Molekulargewicht von 300 und bis zu 1500, vorzugsweise von 300 bis 600. Das Polypropylenglykol hat ein mittleres Molekulargewicht von 300 und bis zu 2000 oder bis zu 1000, vorzugsweise von 300 bis 600. Besonders bevorzugt ist Polypropylenglykol mit einem mittleren Molekulargewicht von 400 bis 500. Die Molekulargewichte sind mittlere Molekulargewichte, berechnet aus der OH-Zahl gemäß DIN 53240-3:2016-03.

Der wässrige Laminierklebstoff enthält mindestens ein in der Klebstoffzusammensetzung dispergiertes Klebstoffpolymer. Das in dem wässrigen Laminierklebstoff dispergierte Klebstoffpolymer hat eine Glasübergangstemperatur von vorzugsweise -40 bis +15 °C, besonders bevorzugt von -35 bis 0 °C.

Das Klebstoffpolymer ist vorzugsweise ausgewählt aus Polyurethanen und Polymeren, die herstellbar sind durch radikalische Emulsionspolymerisation von ethylenisch ungesättigten, radikalisch polymerisierbaren Monomeren, nachfolgend auch Emulsionspolymerisat genannt. Die radikalisch polymerisierbaren Monomeren umfassen vorzugsweise

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe, vorzugsweise ausgewählt aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat und Mischungen dieser Monomere;
c) optional mindestens einem weiteren, von den Monomeren a) und b) verschiedenen Monomer.

Vorzugsweise ist das Klebstoffpolymer herstellbar durch radikalische Emulsionspolymerisation von ethylenisch ungesättigten, radikalisch polymerisierbaren Monomeren umfassend

a) 60 bis 99,9 Gew.%, bezogen auf die Gesamtmenge an Monomeren, mindestens eines Monomeren ausgewählt

aus der Gruppe bestehend aus C1- bis C20-Alkylacrylaten, C1- bis C20-Alkylmethacrylaten, Vinylaromaten mit bis zu 20 C-Atomen, und

b) 0,1 bis 5 Gew.%, bezogen auf die Gesamtmenge an Monomeren, mindestens eines Monomeren mit mindestens einer Säuregruppe, ausgewählt aus Acrylsäure, Methacrylsäure und Itaconsäure und

c) 0 bis 10 Gew.%, bezogen auf die Gesamtmenge an Monomeren, an weiteren, von den Monomeren a) bis b) verschiedenen Monomeren, ausgewählt aus der Gruppe bestehend aus Acrylamid, Methacrylamid, N-Methylolacrylamid, N-Methylolmethacrylamid, Phenyloxyethyl-glykolmono(meth)acrylat, Hydroxylgruppen enthaltende Monomere, Aminogruppen enthaltende Monomere, Nitrile alpha,beta-monoethylenisch ungesättigter C3-C8-Carbonsäuren, bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen und vernetzende Monomere, welche mehr als eine radikalisch polymerisierbare Gruppe aufweisen.

Vorzugsweise werden die Monomere a) in einer Menge von mindestens 80 Gew.%, bezogen auf die Gesamtmenge der Monomere, eingesetzt und sind ausgewählt sind aus der Gruppe bestehend aus C1- bis C10-Alkylacrylaten, C1- bis C10-Alkylmethacrylaten, Styrol und deren Gemisch. Vorzugsweise werden die Monomere b) in einer Menge von 0,5 bis 5 Gew.%, bezogen auf die Gesamtmenge der Monomere, eingesetzt und sin ausgewählt aus der Gruppe bestehend aus Acrylsäure, Methacrylsäure, Itaconsäure und deren Gemisch.

Monomere a)

Die Monomerenmischung besteht vorzugsweise aus mindestens 60 Gew.%, bevorzugt zu mindestens 80 Gew.-%, z.B. von 60 bis 99,9 Gew.% oder von 80 bis 99,9 Gew.%, oder von 80 bis 98 Gew.%, besonders bevorzugt zu mindestens 90 Gew.-% bezogen auf die Gesamtmenge an Monomeren, aus mindestens einem Monomeren a) ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere.

Geeignete Monomere a) sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat sowie Behenyl(meth)acrylat, Isobutylacrylat, tert.-Butyl(meth)acrylat und Cyclohexyl(meth)acrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Monomere a) bevorzugt sind die $C_1$- bis $C_{10}$-Alkylacrylate, C1- bis C10-Alkylmethacrylate, insbesondere $C_1$-bis Cs-Alkylacrylate und -methacrylate sowie Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat und 2-Ethylhexylacrylat, 2-Propylheptylacrylat, Styrol sowie Mischungen dieser Monomere.

Monomere b)

Die Monomerenmischung besteht vorzugsweise zu mindestens 0,1 Gew.-%, insbesondere von 0,1 bis 5 Gew.% oder von 0,5 bis 3 Gew.%, bezogen auf die Gesamtmenge an Monomeren, aus mindestens einem ethylenisch ungesättigten Monomeren mit mindestens einer Säuregruppe (Säuremonomer). Die Säuremonomere b) umfassen sowohl Monomere, die wenigstens eine saure Gruppen enthalten, als auch deren Anhydride und deren Salze. Zu den Monomeren b) zählen alpha,beta-monoethylenisch ungesättigte Mono- und Dicarbonsäuren, Halbester von alpha, beta-monoethylenisch ungesättigten Dicarbonsäuren, die Anhydride der vorgenannten alpha, beta-monoethylenisch ungesättigten Carbonsäuren sowie ethylenisch ungesättigte Sulfonsäuren, Phosphonsäuren oder Dihydrogenphosphate und deren wasserlösliche Salze, z.B. deren Alkalimetallsalze. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugte Monomere b) sind alpha,beta-monoethylenisch ungesättigte C3-C8-Carbonsäuren und C4-C8-Dicarbonsäuren, z.B. Itaconsäure, Crotonsäure, Vinylessigsäure, Acrylamidoglykolsäure, Acrylsäure und Methacrylsäure, sowie deren Anhydride. Besonders bevorzugte Monomere b) sind Itaconsäure, Acrylsäure und Methacrylsäure.

Die Säuregruppen des Monomers b) können zu Beginn der Polymerisation noch unneutralisiert vorliegen und erst während oder nach der Emulsionspolymerisation ganz oder teilweise durch Zulauf einer Base neutralisiert werden, wobei z.B. der Zulauf der Base während der Emulsionspolymerisation (d.h. nach dem Start der Polymerisationsreaktion) beginnt nachdem mindestens 5 Gew.%, vorzugsweise 10 bis 70 Gew.% der gesamten Monomerenmischung im Reaktionsgefäß unter Polymerisationsbedingungen vorliegen. Das Neutralisationsmittel kann z.B. in einem separaten Zulauf parallel zum Zulauf der Monomermischung zugegeben werden. Nach Zulauf sämtlicher Monomere ist vorzugsweise die zur Neutralisation von mindestens 10%, vorzugsweise 10 bis 100% oder 25 bis 90% Säureäquivalenten benötigte Menge an Neutralisationsmittel in dem Polymerisationsgefäß enthalten. Geeignete Basen sind z.B. Natronlauge, Kalilauge, Ammoniak (vorzugsweise in wässriger Lösung) oder organische Amine, vorzugsweise tertiäre Amine, insbesondere Trialkylamine mit vorzugsweise 1 bis 4 C-Atomen in der Alkylgruppe wie z.B. Triethylamin.

Monomere c)

Die Monomerenmischung kann optional mindestens ein weiteres, von den Monomeren a) und b) verschiedenes Monomer c) enthalten. Die Monomere c) können z.B. von 0 bis 10 Gew.% oder von 0 bis 5 Gew.-%, insbesondere von 0,1 bis 10 Gew.% oder von 0,1 bis 5 Gew.% oder von 0,2 bis 3 Gew.%, bezogen auf die Gesamtmenge an Monomeren eingesetzt werden.

Monomere c) sind beispielsweise neutrale bzw. nichtionische Monomere mit erhöhter Wasserlöslichkeit, z.B. die Amide oder die N-Alkylolamide der vorgenannten ethylenisch ungesättigten Carbonsäuren, beispielsweise Acrylamid, Methacrylamid, N-Methylolacrylamid und N-Methylolmethacrylamid oder Phenyloxyethylglykolmono(meth)acrylat genannt. Weitere Monomere c) sind z.B. auch Hydroxylgruppen enthaltende Monomere, insbesondere die Hydroxyalkylester der vorgenannten alpha,beta-monoethylenisch ungesättigten Carbonsäuren, vorzugsweise $C_1$-$C_{10}$-Hydroxyalkyl(meth)acrylate wie z.B. Hydroxyethylacrylat, Hydroxyethylmethacrylat, Hydroxypropylacrylat oder Hydroxypropylmethacrylat sowie 4-Hydroxybutylacrylat.

Weitere Monomere c) sind z.B. auch Aminogruppen enthaltende Monomere, insbesondere die Aminoalkylester der vorgenannten alpha,beta-monoethylenisch ungesättigten Carbonsäuren, vorzugsweise $C_1$-$C_{10}$-Aminoalkyl(meth)acrylate wie z.B. 2-Aminoethyl-(meth)acrylat oder tert.-Butylaminoethylmethacrylat. Weiterhin kommen als Monomere c) die Nitrile alpha,beta-monoethylenisch ungesättigter C3-C8-Carbonsäuren, wie z.B. Acrylnitril oder Methacrylnitril in Betracht.

Geeignete Monomere c) sind auch bifunktionelle Monomere, die neben einer ethylenisch ungesättigten Doppelbindung wenigstens eine Glycidylgruppe, Oxazolingruppe, Ureidogruppe, ureido-analoge Gruppe oder Carbonylgruppe aufweisen und vernetzenden Monomeren, welche mehr als eine radikalisch polymerisierbare Gruppe aufweisen. Beispiele für Monomere mit Glycidylgruppe sind ethylenisch ungesättigte Glycidylether und Glycidylester, z.B. Vinyl-, Allyl- und Methallylglycidylether, Glycidyl(meth)acrylat. Beispiele für Monomere mit Carbonylgruppe sind die Diacetonylamide der obengenannten ethylenisch ungesättigten Carbonsäuren, z.B. Diaceton(meth)acrylamid und die Ester der Acetylessigsäure mit den obengenannten Hydroxyalkylestern ethylenisch ungesättigter Carbonsäuren, z.B. Acetylacetoxyethyl(meth)acrylat.

Beispiele für Monomere c) mit Oxazolingruppe sind solche der Formel:

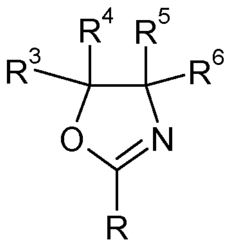

wobei die Reste die folgenden Bedeutungen haben:

R ist ein $C_{2-20}$-Alkenylrest, umfassend mindestens eine ethylenisch ungesättigte Gruppe;
$R^3$, $R^4$, $R^5$, $R^6$ sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl, bevorzugt ausgewählt aus H, Halogen und $C_{1-20}$-Alkyl.

Insbesondere bevorzugt handelt es sich bei den Oxazolin-Monomeren um mindestens ein Monomer ausgewählt aus der Gruppe bestehend aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-teramethyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2- Isopropenyl-5,5-dimethyl-2-oxazolin und 2- Isopropenyl-4,4,5,5-teramethyl-2-oxazolin. Besonders bevorzugt ist die Verwendung von 2-Vinyl-2-oxazolin und/oder 2-Isopropenyl-2-oxazolin, insbesondere bevorzugt ist 2-Isopropenyl-2-oxazolin (iPOx).

Beispiele für Monomere c) mit Ureidogruppe oder ureido-analoger Gruppe sind z.B. solche der Formel

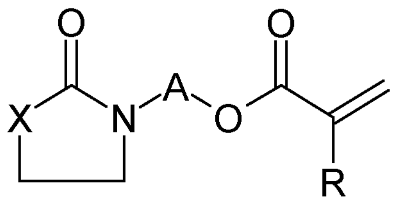

wobei X für $CH_2$, O, NH oder $NR^1$ steht und $R^1$ für eine C1 bis C4-Alkylgruppe steht, R für Wasserstoff oder Methyl steht und A für eine divalente Verbindungsgruppe steht, vorzugsweise für eine C1 bis C10-Alkylgruppe oder für eine C2 bis C4-Alkylgruppe. Besonders bevorzugt sind Ureidoalkyl(meth)acrylate mit 1 bis 10 C-Atomen, vorzugsweise 2 bis 4 C-Atomen in der Alkylgruppe, insbesondere Ureidoethylmethacrylat (UMA).

Beispiele für Monomere c) sind auch vernetzende Monomere, welche mehr als eine radikalisch polymerisierbare Gruppe aufweisen, insbesondere zwei oder mehr (Meth)acrylatgruppen wie z.B. Butandioldi(meth)acrylat oder Allylmethacrylat.

Bevorzugte Monomere c) sind solche, die die Nachvernetzung des Polymers, beispielsweise mit polyfunktionellen Aminen, Hydraziden, Isocyanaten oder Alkoholen ermöglichen. Eine Vernetzung ist auch durch Metallsalzvernetzung der Carboxylgruppen möglich unter Verwendung von mehrwertigen Metallkationen, z.B. Zn oder Al.

Eine geeignete Vernetzung kann z.B. dadurch erfolgen, dass das Polymer Keto- oder Aldehydgruppen enthält (vorzugsweise 0,0001 bis 1 Mol, oder 0,0002 bis 0,10 Mol, oder 0,0006 bis 0,03 Mol) und die Polymerdispersion zusätzlich eine Verbindung enthält mit mindestens 2 funktionellen Gruppen, insbesondere 2 bis 5 funktionellen Gruppen, die mit den Keto- oder Aldehydgruppen eine Vernetzungsreaktion eingehen. Die Keto- oder Aldehydgruppen können durch Copolymerisation von geeigneten Monomeren c) an das Polymer gebunden. Geeignete Monomere c) sind z.B. Acrolein, Methacrolein, Vinylalkylketone mit 1 bis 20, vorzugsweise 1 bis 10 C-Atomen im Alkylrest, Formylstyrol, (Meth)acrylsäurealkylester mit ein oder zwei Keto- oder Aldehydgruppen bzw. einer Aldehyd- und einer Ketogruppe im Alkylrest, wobei der Alkylrest vorzugsweise insgesamt 3 bis 10 C-Atome umfasst, z. B. (Meth)acryloxyalkylpropanale. Des Weiteren eignen sich auch N-Oxoalkyl(meth)acrylamide. Besonders bevorzugt sind Acetoacetyl(meth)acrylat, Acetoacetoxyethyl(meth) acrylat und insbesondere Diacetonacrylamid.

Verbindungen, die mit den Keto- oder Aldehydgruppen eine Vernetzungsreaktion eingehen können sind z.B. Verbindungen mit Hydrazid-, Hydroxylamin-, Oximether- oder Aminogruppen. Geeignete Verbindungen mit Hydrazidgruppen sind z.B. Polycarbonsäurehydrazide mit einem Molgewicht von bis zu 500 g/mol. Bevorzugte Hydrazidverbindungen sind Dicarbonsäuredihydrazide mit bevorzugt 2 bis 10 C-Atomen. Genannt seien z.B. Oxalsäuredihydrazid, Malonsäuredihydrazid, Bernsteinsäuredihydrazid, Glutarsäuresäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Besonders bevorzugt sind Adipinsäuredihydrazid, Sebazinsäuredihydrazid und Isophthalsäuredihydrazid. Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid und Propylenoxid Addukte wie die "Jeffamine", Cyclohexandiamin und Xylylendiamin. Die Verbindung mit den funktionellen Gruppen kann der Zusammensetzung, bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein. Die Menge der Verbindung mit dem funktionellen Gruppen wird vorzugsweise so bemessen, dass das Molverhältnis der funktionellen Gruppen zu den Keto- und/oder Aldehydgruppen des Polymeren 1 : 10 bis 10 : 1, insbesondere 1 : 5 bis 5 : 1, besonders bevorzugt 1 : 2 bis 2 : 1 und ganz besonders bevorzugt 1 : 1,3 bis 1,3 : 1 beträgt. Insbesondere sind äquimolare Mengen der funktionellen Gruppen und der Keto- und/oder Aldehydgruppen bevorzugt.

Vorzugsweise ist das in der wässrigen Phase dispergierte Klebstoffpolymer ein Styrol/Acrylat Copolymer, gebildet aus einem Monomerengemisch enthaltend Styrol und mindestens ein Monomer ausgewählt aus C1- bis C20-Alkylacrylaten und C1- bis C20-Alkylmethacrylaten, z.B. einen Monomerengemisch enthaltend oder bestehend aus 40 bis 70 Gew.% mindestens eines C2- bis C8-Alkylacrylats (vorzugsweise Butylacrylat oder Ethylhexylacrylat), 25 bis 55 Gew.% Styrol und 0,5 bis 5 Gew.% Säuremonomere.

Als in der wässrigen Phase dispergierte Klebstoffpolymere bevorzugt sind auch Acrylatpolymere, gebildet aus einem Monomerengemisch enthaltend oder bestehend aus 75 bis 90 Gew.% mindestens eines C2- bis C8-Alkylacrylats

(vorzugsweise Ethylacrylat, Butylacrylat oder Ethylhexylacrylat), 5 bis 20 Gew.% Methyl(meth)acrylat und 0,5 bis 5 Gew.% Säuremonomere.

Vorzugsweise sind die Monomere der Polymerisation so ausgewählt, dass die gemessene Glasübergangstemperatur des Klebstoffpolymers im Bereich von -40 °C bis +15 °C, insbesondere von -35 °C bis +10 °C oder von -35 °C bis 0 °C oder von -10 °C bis +10 °C liegt. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

In einer Ausführungsform der Erfindung wird bei der radikalischen Polymerisation mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 0,8 Gew.-Teile und ganz besonders bevorzugt 0,1 bis 0,6 Gew.-Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol. Bevorzugt sind 2-Ethylhexylthioglycolat (EHTG), Isooctyl-3-mercaptopropionat (IOMPA) und tert.-Dodecylmercaptan (tDMK).

Die Polymerisation kann saatkontrolliert erfolgen, d.h. in Gegenwart von Polymersaat (Saatlatex). Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,01 bis 0,5 Gew.-Teilen, besonders bevorzugt von 0,03 bis 0,3 Gew.-Teilen, oder von 0,03 bis kleiner oder gleich 0,1 Gew.-Teilen bezogen auf 100 Gewichtsteile Monomere. Geeignet ist z.B. ein Latex auf Basis von Polystyrol oder auf Basis von Polymethylmethacrylat. Ein bevorzugter Saatlatex ist Polystyrolsaat.

Bei der Emulsionspolymerisation werden ethylenisch ungesättigte Verbindungen (Monomere) in Wasser polymerisiert, wobei meist ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Die grenzflächenaktiven Substanzen werden üblicherweise in Mengen von 0,1 bis 10 Gew.-Teilen, vorzugsweise 0,2 bis 5 Gew.-Teilen bezogen auf 100 Gew.-Teile der zu polymerisierenden Monomeren verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: $C_8$- bis $C_{36}$), ethoxylierte Mono-, Di- und Trialkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: $C_9$- bis $C_{18}$).

Weitere geeignete Emulgatoren sind Verbindungen der allgemeinen Formel

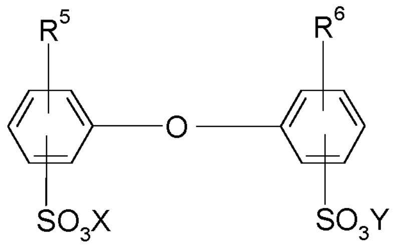

worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei den Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt vorzugsweise bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann in Form eines Zulaufverfahrens, einschließlich Stufen- oder Gradientenfahrweise, durchgeführt werden. Bei der Polymerisation kann zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 60 Gew.-%, besonders bevorzugt größer oder gleich 50 Gew.-% erhalten.

Das so hergestellte Polymerisat wird vorzugsweise in Form seiner wässrigen Dispersion verwendet. Die Größenverteilung der Dispersionsteilchen kann monomodal, bimodal oder polymodal sein und ist vorzugsweise monomodal. Der mittlere Teilchendurchmesser der in der wässrigen Dispersion dispergierten Polymerteilchen ist vorzugsweise größer als 200 nm, vorzugsweise größer 250 nm, z.B. von 200 nm bis 400 nm oder von 250 nm bis 350 nm. Die Messung von mittleren Teilchendurchmessern $x_{PCS}$ und Teilchengrößenverteilung erfolgt durch Photonenkorrelationsspektroskopie (ISO-Norm 13321:1996). Eine monomodale Größenverteilung der Dispersionsteilchen liegt dann vor, wenn bei der Messung der Teilchengrößenverteilung nur ein einziges Maximum vorliegt.

Die wässrige Laminierklebstoffzusammensetzung kann als Einkomponentenmittel angewendet, d.h. ohne zusätzliche Vernetzungsmittel, insbesondere ohne Isocyanatvernetzer. Jedoch kann die Dispersionsklebstoffzusammensetzung auch ein in der wässrigen Phase dispergiertes vernetzbares Klebstoffpolymer und mindestens einen reaktiven Vernetzer enthalten. Es handelt sich dann vorzugsweise um einen zweikomponentigen Klebstoff, bei dem eine Vernetzungskomponente, wie z.B. ein Isocyanat, vorzugsweise ein wasseremulgierbares Isocyanat zugesetzt wird.

Als Klebstoffpolymer können auch Polyurethane eingesetzt werden. Geeignete Polyurethandispersionen sind prinzipiell durch Umsetzung wenigstens eines Polyisocyanats mit wenigstens einer Verbindung, die mindestens zwei gegenüber Isocyanatgruppen reaktive Gruppen aufweist, und Dispersion in Wasser erhältlich. Geeignete Polyurethane umfassen auch sogenannte Polyurethan-Polyharnstoffe, welche neben Polyurethangruppen auch noch Harnstoffgruppen aufweisen. Bevorzugt enthält die Polyurethandispersion wenigstens ein Polyurethan, das wenigstens ein Polyisocyanat und wenigstens ein polymeres Polyol einpolymerisiert enthält. Insbesondere kann das Polyurethan gebildet sein aus wenigstens einem Polyisocyanat und wenigstens einem polymeren Polyol. Geeignete polymere Polyole sind vorzugsweise ausgewählt unter Polyesterdiolen, Polyetherdiolen, Polycarbonatdiolen und Gemischen davon. Das polymere Polyol weist vorzugsweise ein zahlenmittleres Molekulargewicht im Bereich von etwa 500 bis 5000 g/mol auf. Bevorzugt sind polymere Diole. Bevorzugt enthält die Polyurethandispersion wenigstens ein Polyurethan, das wenigstens ein Polyisocyanat und eine Diolkomponente einpolymerisiert enthält, von denen a) 10 -100 mol-% bezogen auf die Gesamtmenge der Diole, ein Molekulargewicht von 500 bis 5000 g/mol aufweisen und b) 0 - 90 mol-% bezogen auf die Gesamtmenge der Diole, ein Molekulargewicht von 60 bis 500 g/mol aufweisen.

Vorzugsweise ist das Polyurethan zu mindestens 40 Gew.-%, besonders bevorzugt zu mindestens 60 Gew.-% und ganz besonders bevorzugt zu mindestens 80 Gew.-%, bezogen auf das Gesamtgewicht der zur Herstellung des Polyurethans eingesetzten Monomere, aus wenigstens einem Diisocyanat und wenigstens einem Polyetherdiol und/oder Polyesterdiol aufgebaut. Geeignete weitere Aufbaukomponenten ad 100 Gew.-% sind z.B. die im Folgenden aufgeführten Polyisocyanate mit wenigstens drei NCO-Gruppen und von den polymeren Polyolen verschiedene Verbindungen mit wenigstens zwei gegenüber Isocyanatgruppen reaktiven Gruppen. Dazu zählen z.B. Diole; Diamine; von polymeren Polyolen verschiedene Polymerisate mit mindestens zwei aktiven Wasserstoffatomen pro Molekül; Verbindungen, die zwei aktive Wasserstoffatome und mindestens eine ionogene bzw. ionische Gruppe pro Molekül aufweisen; und Mischungen davon.

Vorzugsweise hat das Polyurethan einen Erweichungspunkt oder Schmelzpunkt im Bereich von -50 bis 150 °C, besonders bevorzugt von 0 bis 100 °C, und ganz besonders bevorzugt von 10 bis 90 °C. Besonders bevorzugt hat das Polyurethan einen Schmelzpunkt im vorstehenden Temperaturbereich.

Bevorzugte Polyurethane sind aufgebaut aus:

a) wenigstens einem monomeren Diisocyanat,

b) wenigstens einem Diol, wobei die Komponente (b) wenigstens ein Diol mit einem zahlenmittleren Molekulargewicht im Bereich von 500 bis 5000 g/mol aufweist,

c) wenigstens einem von den Monomeren (a) und (b) verschiedenen Monomer mit wenigstens einer Isocyanatgruppe oder wenigstens einer gegenüber Isocyanatgruppen reaktiven Gruppe, das darüber hinaus wenigstens eine hydrophile Gruppe oder eine potentiell hydrophile Gruppe trägt,

d) optional wenigstens einer weiteren, von den Monomeren (a) bis (c) verschiedenen Verbindung mit wenigstens zwei reaktiven Gruppen, die ausgewählt sind unter alkoholischen Hydroxylgruppen, primären oder sekundäre Aminogruppen oder Isocyanatgruppen, und

e) optional wenigstens einer von den Monomeren (a) bis (d) verschiedenen einwertigen Verbindung mit einer reaktiven Gruppe, bei der es sich um eine alkoholische Hydroxylgruppe, eine primäre oder sekundäre Aminogruppe oder eine Isocyanatgruppe handelt.

Die Komponente b) besteht vorzugsweise aus

$b_{1)}$ 10 bis 100 mol-%, bezogen auf die Gesamtmenge der Komponente b), Diole, die ein Molekulargewicht von 500 bis 5000 g/mol aufweisen,

$b_{2)}$ 0 bis 90 mol-%, bezogen auf die Gesamtmenge der Komponente b), Diole, die ein Molekulargewicht von 60 bis weniger als 500 g/mol aufweisen.

Besonders bevorzugt beträgt das Verhältnis der Diole $b_1$) zu den Monomeren $b_2$) 0,1 : 1 bis 5:1, besonders bevorzugt 0,2 : 1 bis 2 : 1. Insbesondere ist das Diol b) ausgewählt aus Polytetrahydrofuran, Polypropylenoxid und Polyesterdiolen, ausgewählt aus Umsetzungsprodukten zweiwertiger Alkohole mit zweiwertigen Carbonsäuren und Polyesterdiolen auf Lacton-Basis.

Insbesondere zu nennen sind als Monomere (a) Diisocyanate $X(NCO)_2$, wobei X für einen nicht-cyclischen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 5-Isocyanato-1-(isocyanatomethyl)-1,3,3-trimethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanatodiphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich. Als Gemische dieser Isocyanate sind besonders die Mischungen der jeweiligen Strukturisomeren von Diisocyanatotoluol und Diisocyanatodiphenylmethan von Bedeutung, insbesondere ist die Mischung aus 80 mol-% 2,4-Diisocyanatotoluol und 20 mol-% 2,6-Diisocyanatotoluol geeignet und bevorzugt. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 1:9 bis 9:1, insbesondere 4 : 1 bis 1 : 4 beträgt.

Bei den Diolen (b1) kann es sich um Polyesterpolyole handeln, die z. B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel $HOOC-(CH_2)_y-COOH$, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als zweiwertige Alkohole kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bei den Diolen (b1) kann es sich auch um Polycarbonat-Diole handeln, wie sie z. B. durch Umsetzung von Phosgen mit einem Überschuss von den als Aufbaukomponenten für die Polyesterpolyole genannten niedermolekularen Alkohole erhalten werden können, in Betracht.

Bei den Diolen (b1) kann es sich auch um Polyesterdiole auf Lacton-Basis handeln, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel $HO-(CH_2)_z-COOH$ ableiten, wobei z eine Zahl von 1 bis 20 ist und ein H-Atom einer Methyleneinheit auch durch einen $C_1$- bis $C_4$-Alkylrest substituiert sein kann. Beispiele sind epsilon-Caprolacton, beta-Propiolacton, gamma-Butyrolacton und/oder Methylgamma-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bei den Diolen (b1) kann es sich auch um Polyetherdiole handeln. Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polyetherdiole eines Molekulargewichts von 500 bis 5000, und vor allem 600 bis 4500. Besonders bevorzugte Polyetherdiole sind Polypropylenoxid und Polytetrahydrofuran. Geeignete Polytetrahydrofurane können durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt. Geeignete Verbindungen b1) sind auch alpha,omega-Diaminopolyether, die durch Aminierung von Polyalkylenoxiden mit Ammoniak herstellbar sind.

Unter $b_1$) fallen nur Polyetherdiole, die zu weniger als 20 Gew.-%, bezogen auf ihr Gesamtgewicht, aus Ethylenoxid bestehen. Polyetherdiole mit mindestens 20 Gew.-% eingebauten Ethylenoxideinheiten sind hydrophile Polyetherdiole, welche zu den Monomeren c) zählen.

Optional können als Monomere $b_1$) auch Polyhydroxyolefine mitverwendet werden, bevorzugt solche mit 2 endständigen Hydroxylgruppen, z. B. alpha-omega-Dihydroxypolybutadien, alpha-omega-Dihydroxypolymethacrylester oder alpha-omega-Dihydroxypolyacrylester als Monomere.

Solche Verbindungen sind beispielsweise aus der EP-A 622 378 bekannt. Weitere geeignete Polyole sind Polyacetale, Polysiloxane und Alkydharze.

Bevorzugt handelt es sich bei mindestens 95 mol-% der Diole $b_1$) um Polyesterdiole und/oder Polytetrahydrofuran. Besonders bevorzugt werden als Diole $b_1$) ausschließlich Polyesterdiole und/oder Polytetrahydrofuran verwendet.

Die Härte und der Elastizitätsmodul der Polyurethane lassen sich erhöhen, wenn als Diole (b) neben den Diolen $b_1$) noch niedermolekulare Diole $b_2$) mit einem Molekulargewicht von etwa 60 bis 500, vorzugsweise von 62 bis 200 g/mol, eingesetzt werden. Als Monomere $b_2$) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden. Als Diole $b_2$) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohe-xane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Um die Wasserdispergierbarkeit der Polyurethane zu erreichen, enthalten die Polyurethane von den Komponenten (a) und (b) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge der Komponenten (a) bis (f) wird im allgemeinen so bemessen, dass die Molmenge der (potentiell) hydrophilen Gruppen (vorzugsweise anionischen oder potentiell anionischen Gruppen) bezogen auf die Gewichtsmenge aller Monomere (a) bis (e), 30 bis 1000, bevorzugt 50 bis 500 und besonders bevorzugt 80 bis 300 mmol/kg beträgt. Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im Allgemeinen 0 bis 10, bevorzugt 0 bis 6 Gew. %, bezogen auf die Gewichtsmenge aller Monomere (a) bis (e). Bevorzugte Monomere mit nichtionischen hydrophilen Gruppen sind Polyethylenoxiddiole mit mindestens 20 Gew. % Ethylenoxid, Polyethylenoxidmonoole sowie die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere (c) sind z. B. in Ullmanns Enzyklopädie der technischen Chemie, 4. Auflage, Band 19, S. 311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen,

wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie $C_1$- bis $C_6$-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, wie sie auch in der US 3,412,054 beschrieben sind. Insbesondere sind Verbindungen der allgemeinen Formel ($c_1$)

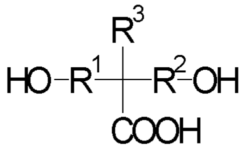

($c_1$)

in welcher $R^1$ und $R^2$ für eine $C_1$- bis $C_4$-Alkandiyl-(Einheit) und $R^3$ für eine $C_1$- bis $C_4$-Alkyl-(Einheit) steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure. Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen auch Aminocarbonsäuren wie Lysin, beta-Alanin oder die in der DE-A 20 34 479 genannten Addukte von aliphatischen diprimären Diaminen an alpha,beta-ungesättigte Carbon- oder Sulfonsäuren in Betracht. Solche Verbindungen gehorchen beispielsweise der Formel ($c_2$)

$H_2N-R^4-NH-R^5-X$ ($c_2$)

in der $R^4$ und $R^5$ unabhängig voneinander für eine $C_1$- bis $C_6$-Alkandiyl-Einheit, bevorzugt für Ethylen; und X für COOH oder $SO_3H$ stehen. Besonders bevorzugte Verbindungen der Formel ($c_2$) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Triisopropylamin (TIPA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche optional auch Bestandteile des Polyurethans sind, dienen im Allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z. B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyl-octan. Die Amine können auch in blockierter Form, z. B. in Form der entsprechenden Ketimine (siehe z. B. CA-A 1 129 128), Ketazine (vgl. z. B. die US-A 4,269,748) oder Aminsalze (siehe US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d). Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die optional mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a'-dimethylbenzylisocyanat (TMI) und Ester von Acryl- oder Methacrylsäure wie Hydroxyethylacrylat oder Hydroxyethylmethacrylat.

Beschichtungen mit einem besonders guten Eigenschaftsprofil erhält man vor allem dann, wenn als Monomere (a) im Wesentlichen nur aliphatische Diisocyanate, cycloaliphatische Diisocyanate oder araliphatische Diisocyanate eingesetzt werden. Diese Monomerkombination wird in hervorragender Weise ergänzt als Komponente (c) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA und IPDA als Komponente (d).

Bevorzugt sind auch Polyurethane, dadurch gekennzeichnet, dass

die Diisocyanate a) ausgewählt sind aus Diisocyanaten der Formel $X(NCO)_2$, wobei X für einen nicht-cyclischen aliphatischen Kohlenwasserstoffrest mit 4 bis 15 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder für einen araliphatischen Kohlenwasserstoffrest mit 7 bis 15 Kohlenstoffatomen steht, vorzugsweise ausgewählt aus der Gruppe bestehend aus Hexamethylendiisocyanat, 5-isocyanato-1-(isocyanatomethyl)-1,3,3-trimethylcyclohe-xane, 2,6-Diisocyanatotoluol, 2,4-Diisocyanatotoluol und Tetramethylxylylendiisocyanat oder deren Mischung;
die Diole b1) ausgewählt sind aus Polyesterdiolen, Polycarbonatdiolen und Polyetherdiolen; und
die Verbindung c) ausgewählt ist aus Dihydroxycarbonsäuren, Diaminocarbonsäuren und Diaminosulfonsäuren.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (e) sowie ihre jeweiligen Molmengen so gewählt, dass das Verhältnis A : B mit

A der Molmenge an Isocyanatgruppen und
B der Summe aus der Molmenge der Hydroxylgruppen und der Molmenge der funktionellen Gruppen, die mit Isocyanaten in einer Additionsreaktion reagieren können,

0,5 : 1 bis 2 : 1, bevorzugt 0,8 : 1 bis 1,5 : 1, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt.

Unter einer wässrigen Polyurethandispersion wird im Rahmen der vorliegenden Erfindung eine Dispersion verstanden, die als kontinuierliche Phase ein wässriges Lösungsmittel aufweist. Geeignete wässrige Lösungsmittel sind Wasser und Gemische aus Wasser mit wassermischbaren Lösungsmitteln, beispielsweise Alkoholen, wie Methanol, Ethanol, n-Propanol, Isopropanol, n-Butanol, sek.-Butanol, tert.-Butanol, n-Hexanol und Cyclohexanol; Glykole, wie Ethylenglykol, Propylenglykol und Butylenglykol; die Methyl- oder Ethylether der zweiwertigen Alkohole, Diethylenglykol, Triethylenglykol, Polyethylenglykole mit zahlenmittleren Molekulargewichten bis etwa 3000, Glycerin und Dioxan sowie Ketone, wie insbesondere Aceton. In einer speziellen Ausführungsform ist die Polyurethandispersion im Wesentlichen frei von organischen Lösungsmitteln. Unter "im Wesentlichen frei von organischen Lösungsmitteln" wird dabei verstanden, dass der Anteil organischer Lösungsmittel höchstens 5 Gew.-%, besonders bevorzugt höchstens 1 Gew.-%, insbesondere höchstens 0,1 Gew.-%, bezogen auf das Gesamtgewicht des Lösungsmittels, beträgt.

Die Herstellung der Polyurethane erfolgt in einer bevorzugten Ausführung in Gegenwart wenigstens eines organischen Lösungsmittels. Bevorzugte organische Lösungsmittel zur Herstellung der Polyurethane sind Ketone, wie Aceton und Methylethylketon, sowie N-Methylpyrrolidon. Besonders bevorzugt wird Aceton eingesetzt. Sofern zur Herstellung der Polyurethane ein zumindest teilweise wassermischbares Lösungsmittel eingesetzt wird, kann die erfindungsgemäße Polyurethandispersion neben Wasser das zur Herstellung eingesetzte organische Lösungsmittel enthalten. Selbstverständlich kann die Herstellung der erfindungsgemäßen Polyurethandispersionen in Gegenwart wenigstens eines organischen Lösungsmittels erfolgen und dieses anschließend teilweise oder vollständig gegen Wasser ausgetauscht werden.

Der pH-Wert der Laminierklebstoffdispersion wird vorzugsweise auf pH größer 5, insbesondere auf einen pH-Wert zwischen 5,5 und 8 eingestellt.

Bevorzugte Laminierklebstoffdispersionen haben eine Viskosität von 12 s bis 26 s, besonders bevorzugt von 13 s bis 20 s bei 23 °C, gemessen mit DIN-Auslaufbecher Nr. 4 nach DIN EN ISO 2431:2011.

Die wässrigen Laminierklebstoffdispersionen können als solche oder nach Konfektionierung mit üblichen weiteren, von den erfindungsgemäß einzusetzenden Polyalkylenglykolen verschiedenen Hilfsstoffen eingesetzt werden. Übliche Hilfsstoffe sind beispielsweise Füllstoffe, Farbstoffe, Verlaufsmittel, Verdicker, vorzugsweise Assoziativverdicker, Entschäumer, Vernetzer, Weichmacher, Pigmente, Lichtschutzstabilisatoren, Biozide, Tackifier oder Netzmittel. Für eine bessere Benetzung von Oberflächen können insbesondere Benetzungshilfsmittel (Netzmittel), z. B. Fettalkoholethoxylate, Alkylphenolethoxylate, Nonylphenolethoxylate, Natriumdodecylsulfonate enthalten sein. Die Menge an weiteren Hilfsstoffen beträgt vorzugsweise 0,05 bis 5 Gew.-%, insbesondere 0,1 bis 3 Gew.-%.

Vorzugsweise enthält der wässrige Laminierklebstoff

(i) von 30 bis 60 Gew.-% des mindestens einen Klebstoffpolymers;
(ii) von 0,25 bis 3 Gew.-%, besonders bevorzugt von 0,5 bis 1,5 Gew.% des mindestens einen in der wässrigen Phase gelösten Polyalkylenglykols; und
(iii) optional 0 - 10 Gew.-% weitere Bestandteile wie z.B. die oben genannten Netzmittel, Verdicker, Entschäumer, Vernetzer, etc..

Bei dem erfindungsgemäßen Verfahren können die mit Klebstoff beschichteten Artikel beispielsweise ausgewählt sein aus Laminaten, vorzugsweise in Verfahren zum Verkleben von großflächigen Substraten. Vorzugsweise handelt es sich um Verbundfolien oder um Glanzfolien. Bei Verbundfolien sind mindestens zwei Folien unter Verwendung der wässrigen Dispersionsklebstoffzusammensetzung miteinander verklebt, wobei vorzugsweise eine oder beide Folien transparent sind. Bei Glanzfolien ist eine transparente Folie auf Papier oder Pappe laminiert.

Für Anwendungen in Laminier- bzw. Kaschierverfahren ist der Laminierklebstoff vorzugsweise nicht selbstklebend. Nicht selbstklebende Klebstoffe sind Klebstoffe, die im Unterschied zu Haftklebstoffen keine oder nur eine sehr geringe Klebrigkeit bei Raumtemperatur aufweisen und vorzugsweise unter Anwendung von Druck und/oder erhöhter Temperatur angewendet werden. Die Klebrigkeit gemessen als Loop Tack beträgt vorzugsweise weniger als 1,7 N/25 mm (Klebstoff in einer Auftragsstärke von 20 μm aufgetragen auf einer 12 μm starken Polyesterfolie, gemessen auf Stahl bei Raumtemperatur (20 °C) mit einer Abzugsgeschwindigkeit von 300 mm/min).

Bei dem Verfahren zur Herstellung von Verbundfolien werden mindestens zwei Folien unter Verwendung der wässrigen Laminierklebstoffzusammensetzung miteinander verklebt. Dabei wird die Laminierklebstoffzusammensetzung oder eine entsprechend konfektionierte Zubereitung auf die zu verklebenden, großflächigen Substrate vorzugsweise mit einer Schichtdicke von 0,1 bis 20 $g/m^2$, besonders bevorzugt 1 bis 7 $g/m^2$ oder 1 bis 5 $g/m^2$ aufgetragen. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 $kN/m^2$, vorzugsweise 300 bis 2000 $kN/m^2$ betragen kann.

Bei dem erfindungsgemäßen Verfahren zur Verbundfolienkaschierung werden mindestens zwei Folien mit der

wässrigen Dispersionsklebstoffzusammensetzung vorzugsweise derart miteinander verklebt, dass die Schälfestigkeit (nach 24h, bei 23°C / 50% rel. Luftfeuchte) vorzugsweise 2,5 N / 15 mm oder mehr oder 3 N /15 mm oder mehr beträgt oder dass die miteinander verklebten Folien nur unter Zerstörung mindestens einer der Folien trennbar sind.

Bei dem erfindungsgemäßen Verfahren kann wenigstens eine der Folien auf der mit der Laminierklebstoffzusammensetzung beschichteten Seite bedruckt oder metallisiert sein. Als Foliensubstrate eignen sich z.B. Polymerfolien, insbesondere aus thermoplastischen Polyolefinen (TPO) wie Polyethylen (PE), Polypropylen (PP), z.B. orientiertes, vorzugsweise biaxial gerecktes Polypropylen (OPP) oder ungerecktes Polypropylen (CPP), Ethylen/Vinylacetat Copolymere (EVA), ASA (Acrylnitril/Styrol/Acrylsäureester Copolymere), PUR (Polyurethan), Polyamid (PA), Polyester, vorzugsweise Polyethylenterephthalat (PET), Polyvinylchlorid (PVC) insbesondere Weich-PVC, Polyacetat, Poly(meth)acrylate, Polycarbonate oder deren Kunststofflegierungen, Celluloseacetat, Zellglas, mit Metall, z. B. Aluminium, beschichtete (bedampfte) Polymerfolien (kurz : metallisierte Folien) wie z.B. metallisierte Polyolefinfolien oder metallisierte Polyesterfolien oder Metallfolien, z. B. aus Zinn oder Aluminium. Das Foliensubstrat ist bevorzugt ausgewählt ist aus der Gruppe bestehend aus Polyethylen, orientiertem Polypropylen, ungerecktem Polypropylen, Polyamid, Polyethylenterephthalat, Polyacetat, Zellglas, metallisierten Folien und Metallfolien. Die Polymerfolien, insbesondere Polyolefinfolien, können gegebenenfalls coronavorbehandelt sein. Besonders bevorzugt sind die Folien ausgewählt aus Polyethylen, orientiertem Polypropylen, ungerecktem Polypropylen, Polyamid, Polyethylenterephthalat, Polyacetat und Zellglas.

Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein. Die Dicke der Foliensubstrate kann beispielsweise von 5 bis 100 $\mu$m, vorzugsweise von 5 bis 40 $\mu$m betragen.

Im Falle von Verbundfolien ist beispielsweise das Material einer ersten Folie ausgewählt aus OPP, CPP, PE, PET und PA und das Material einer zweiten Folie ausgewählt aus OPP, CPP, PE, PET, PA und Metallfolie. In einer Ausführungsform der Erfindung ist die erste Folie und/oder die zweite Folie auf der jeweiligen Seite, welche mit der Dispersionsklebstoffzusammensetzung beschichtet wird, bedruckt oder metallisiert.

Die erfindungsgemäß erhältlichen Verbundfolien eignen sich insbesondere für die Herstellung von flexiblen Verpackungen, z.B. zur Verpackung von Lebensmitteln.

Eine Oberflächenbehandlung der Foliensubstrate ist vor der Beschichtung mit einer Laminierklebstoffzusammensetzung nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden zur Verstärkung der Haftwirkung, z.B. Primer, Plasmabehandlung oder Coronabehandlung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Geeignete Auftragsgewichte sind beispielsweise

Zur Verbundfolienherstellung:
von 0,1 bis 20 g, besonders bevorzugt 1 bis 7 g, 1 bis 6 g oder 1 bis 5 g Feststoff pro $m^2$

Für sonstige technische Kaschierungen:
von 0,5 bis 100 g, bevorzugt von 2 bis 80 g, ganz besonders bevorzugt von 10 bis 70 g Feststoff pro $m^2$.

Das erfindungsgemäße Verfahren kann außer bei der Verbundfolienkaschierung auch bei weiteren technischen Kaschierverfahren eingesetzt werden, z.B. zur Herstellung von Automobilinnenteilen, zur Möbelkaschierung und zur Glanzfolienkaschierung. Als zu verklebende Substrate kommen dann z.B. solche aus Holz, Metall, Kunststoff, Leder, Faserformteilen, z.B. MDF-Platten, oder Papier in Betracht. Bei der Glanzfolienkaschierung werden transparente Polymerfolien mit Papiersubstraten verklebt.

Bei der Verwendung für die Oberflächenveredlung eines festen Trägers mit einem erfindungsgemäß beschichteten Foliensubstrat, z.B. einer Dekorationsfolie, wird das Foliensubstrat, welches erfindungsgemäß beschichtet ist, beispielsweise mit Gegenständen aus Holz, worunter auch gebundene Holzfasermaterialien wie Spanplatten oder sonstige Platten aus Zellulosematerialien verstanden werden, Metall oder Kunststoff verklebt. Zum Beispiel werden Möbel, bzw. Möbelteile mit dem beschichteten Foliensubstrat kaschiert oder es werden Automobilinnenteile mit dem beschichteten Foliensubstrat aus z.B. PVC oder TPO kaschiert. Besonders eignen sich Polyurethandispersionen als Klebstoff für die Kaschierung von starren Formkörpern mit flexiblen Dekorationsfolien.

Die Auftragung der wässrigen Laminierklebstoffzusammensetzungen auf Folien erfolgt mittels einer Beschichtungsmaschine mit mindestens einer rotierenden Gravurwalze, wobei das Auftragsystem ein Gravurwalzensystem ist, bei dem sich die zu beschichtende Trägerfolie zwischen zwei Walzen bewegt, die sich beide in der Richtung der sich bewegenden Trägerfolienbahn drehen, wobei eine der Walzen eine Gravurwalze ist und der Laminierklebstoff von der Gravurwalze auf die Trägerfolie aufgetragen wird (direct gravure coating system). Die Gravurwalze kann beispielsweise aus Metall oder aus Keramik sein. Die zweite Walze kann eine sogenannte Presseurwalze sein und beispielsweise aus Gummi bestehen oder eine Oberfläche aus Gummi aufweisen. Die mit Laminierkelbstoff bechichtete Folie läuft vorzugsweise durch einen Trockner bevor ein zweites Substrat zukaschiert wird.

Die Bahngeschwindigkeit des Foliensubstrats beträgt vorzugsweise von 50 bis 500 m/min, z.B. mindestens 100 m/min, z.B. von 100 bis 400 m/min oder von 100 bis 300 m/min.

Besondere Vorteile des erfindungsgemäßen Verfahrens sind insbesondere, dass eine optische Störung des Beschichtungsbildes vermieden werden kann, ohne dass eine mechanische Glättungsvorrichtung z.B. in Form einer Glättungswalze oder eines Glättungsstabs eingesetzt werden muss. Vorzugsweise hat das Auftragssystem deshalb keine mechanische Glättungsvorrichtung.

Beispiele

Einsatzstoffe:

| | |
|---|---|
| Laminierklebstoff A | 45%ige wässerige Polymerdispersion eines Polymeren aus n-Butyl-acrylat, Styrol und Acrylsäure mit einer Tg von -4°C |
| Laminierklebstoff B | 45%ige wässerige Polymerdispersion eines Polymeren aus n-Butyl-acrylat, Methylacrylat, Methacrylsäure und Itakonsäure mit einer Tg von -32°C |
| Loxanol® PL 5824 | Polypropylenglykol, Molekulargewicht 430 g/mol (in jedem Verhältnis mit Wasser mischbar) |
| Loxanol® PL 5814 | Polyethylenglykol, Molekulargewicht 400 g/mol, (in jedem Verhältnis mit Wasser mischbar) |
| Hydropalat® WE 3162 | Blockcopolymer basierend auf Polyethylen-, Polypropylenglykol mit einem mittleren Molekulargewicht von 2450 g/mol |

Beispiel 1 (Vergleich, ohne Additiv)
Laminierklebstoff A
Beispiel 2 (Vergleich ohne Additiv)
Laminierklebstoff B
Beispiel 3
Laminierklebstoff A + 1 Gew.-% Polypropylenglykol (Loxanol® PL 5824)
Beispiel 4
Laminierklebstoff B + 2 Gew.-% Polypropylenglykol (Loxanol® PL 5824)
Beispiel 5
Laminierklebstoff B + 2 Gew.-% Polyethylenglykol (Loxanol® PL 5814)
Beispiel 6
Laminierklebstoff B + 1 Gew.-% Polyethylen/propylenglykol (Hydropalat® WE 3162)

Anwendungstechnische Prüfungen:

Es wurden Folienlaminate hergestellt aus zwei klaren, transparenten 20 μm starken oPP-Folien Auftragsgewicht: 2,5 - 3 g/$m^2$
Bahngeschwindigkeit: 200 m/min
Verwendete Gravurwalze: 80 Linien/cm; Linienanordnung 45°; theoretisches Schöpfvolumen 17 ml; gleichlaufend zur Bahnrichtung,
200 mm Durchmesser
Gegendruckwalze: 300 mm Durchmesser, Hartgummi beschichtet
Laminierbedingungen: 0,6 MPa (6 bar) Liniendruck bei 70°C

Die Klarheit der Folienlaminate wurde qualitativ optisch beurteilt.

-- schlecht, starke Trübung und Strukturen im Klebstoff sichtbar
+ gut, kaum Störungen sichtbar
++ sehr gut, keine Störungen sichtbar

Die Ergebnisse sind in Tabelle 1 zusammengefasst.

Tabelle1: Optische Beurteilung von Verbundfolienlaminaten

| Beispiel | | Optische Beurteilung |
|---|---|---|
| 1 | Ohne Additiv Laminierklebstoff A | -- |
| 2 | Ohne Additiv Laminierklebstoff B | -- |
| 3 | 1 % Loxanol® PL 5824 Laminierklebstoff A | ++ |
| 4 | 2% Loxanol PL 5824 Laminierklebstoff B | ++ |
| 5 | 2% Loxanol PL 5814 Laminierklebstoff B | + |
| 6 | + 1% Hydropalat WE 3162 | - |

**Patentansprüche**

1. Verfahren zur Folienkaschierung, wobei ein wässriger Laminierklebstoff mittels eines Auftragsystems auf eine Trägerfolie aufgetragen wird,

   wobei das Auftragsystem ein Gravurwalzensystem ist, bei dem sich die zu beschichtende Trägerfolie zwischen zwei Walzen bewegt, die sich in der Richtung der sich bewegenden Trägerfolienbahn drehen, wobei eine der Walzen eine Gravurwalze ist und der Laminierklebstoff von der Gravurwalze auf die Trägerfolie aufgetragen wird, wobei die mit Klebstoff beschichtete Trägerfolie optional mit einem weiteren Substrat verklebt wird, wobei die Trägerfolie und/oder das optionale Substrat bevorzugt transparent oder bedruckt sind,
   wobei der wässrige Laminierklebstoff

   (a) mindestens ein in der wässrigen Phase dispergiertes Klebstoffpolymer und
   (b) mindestens ein in der wässrigen Phase gelöstes Polyalkylenglykol, ausgewählt aus Polethylenglykol, Polypropylenglykol und deren Mischung, enthält,

   **dadurch gekennzeichnet, dass**
   das Polyethylenglykol ein mittleres Molekulargewicht von 300 und bis zu 1500 hat und das Polypropylenglykol ein mittleres Molekulargewicht von 300 und bis zu 2000 hat und die Molekulargewichte berechnet sind aus der OH-Zahl gemäß DIN 53240-3:2016-03.

2. Verfahren gemäß dem vorhergehenden Anspruch, **dadurch gekennzeichnet, dass** die durch Verkleben mit einem zweiten Substrat hergestellten Artikel ausgewählt sind aus Verbundfolien und Glanzfolien.

3. Verfahren gemäß dem vorhergehenden Anspruch, **dadurch gekennzeichnet, dass** die Artikel Verbundfolien sind, wobei mindestens zwei Folien unter Verwendung der wässrigen Dispersionsklebstoffzusammensetzung miteinander verklebt werden, wobei mindestens eine, vorzugsweise beide Folien transparent sind.

4. Verfahren nach einem der vorhergehenden Ansprüche, **dadurch gekennzeichnet, dass** die Polyalkylenglykole eine Wasserlöslichkeit von mindestens 10 g/l bei 20 °C haben.

5. Verfahren nach einem der vorhergehenden Ansprüche, **dadurch gekennzeichnet, dass** das Polyethylenglykol ein mittleres Molekulargewicht von 300 bis 600 hat und dass das Polypropylenglykol ein mittleres Molekulargewicht von 300 bis 600 hat.

6. Verfahren nach einem der vorhergehenden Ansprüche, **dadurch gekennzeichnet, dass** der Laminierklebstoff

(i) von 30 bis 60 Gew.-% des mindestens einen Klebstoffpolymers und
(ii) von 0,25 bis 3 Gew.-% des mindestens einen in der wässrigen Phase gelösten Polyalkylenglykols enthält.

**7.** Verfahren gemäß einem der vorhergehenden Ansprüche, **dadurch gekennzeichnet, dass** das Klebstoffpolymer eine Glasübergangstemperatur von -40 bis +15 °C, vorzugsweise von -35 bis 0 °C aufweist, gemessen durch Differential Scanning Calorimetrie mit einer Heizrate von 20° C/min.

**8.** Verfahren gemäß einem der vorhergehenden Ansprüche, **dadurch gekennzeichnet, dass**

die Gravurwalze aus Metall oder Keramik ist,
die zweite Walze ein Presseurwalze aus Gummi ist oder eine Gummioberfläche aufweist,
die Bahngeschwindigkeit der Trägerfolie bei der Beschichtung mit Klebstoff mindestens 50 m/min, vorzugsweise von 100 bis 400 m/min beträgt, und
die Auftragsmenge des Laminierklebstoffs von 1 bis 5 $g/m^2$ beträgt.

**9.** Verfahren nach einem der vorhergehenden Ansprüche, **dadurch gekennzeichnet, dass** das Klebstoffpolymer ausgewählt ist aus Polyurethanen und Polymeren, die herstellbar sind durch radikalische Emulsionspolymerisation von ethylenisch ungesättigten, radikalisch polymerisierbaren Monomeren umfassend

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe, vorzugsweise ausgewählt aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat und Mischungen dieser Monomere;
c) optional mindestens einem weiteren, von den Monomeren a) und b) verschiedenen Monomer.

**10.** Verfahren nach einem der vorhergehenden Ansprüche, **dadurch gekennzeichnet, dass** das Klebstoffpolymer ein Polyurethan ist, welches aufgebaut ist aus

a) wenigstens einem monomeren Diisocyanat,
b) wenigstens einem Diol, von dem
b1) 10 bis 100 mol-%, bezogen auf die Gesamtmenge der Diole (b), ein Molekulargewicht von 500 bis 5000 g/mol aufweisen, und
b2) 0 bis 90 mol-%, bezogen auf die Gesamtmenge der Diole (b), ein Molekulargewicht von 60 bis 500 g/mol aufweisen,
c) wenigstens einem von den Monomeren (a) und (b) verschiedenen Monomer mit wenigstens einer Isocyanatgruppe oder wenigstens einer gegenüber Isocyanatgruppen reaktiven Gruppe, das darüber hinaus wenigstens eine hydrophile Gruppe oder eine potentiell hydrophile Gruppe trägt, und
d) optional wenigstens einer weiteren, von den Monomeren (a) bis (c) verschiedenen Verbindung mit wenigstens zwei reaktiven Gruppen, die ausgewählt sind unter alkoholischen Hydroxylgruppen, primären oder sekundäre Aminogruppen oder Isocyanatgruppen, und
e) optional wenigstens einer von den Monomeren (a) bis (d) verschiedenen einwertigen Verbindung mit einer reaktiven Gruppe, bei der es sich um eine alkoholische Hydroxylgruppe, eine primäre oder sekundäre Aminogruppe oder eine Isocyanatgruppe handelt.

**11.** Verfahren nach dem vorhergehenden Anspruch, **dadurch gekennzeichnet, dass**

die Diisocyanate a) ausgewählt sind aus Diisocyanaten der Formel $X(NCO)_2$, wobei X für einen nicht-cyclischen aliphatischen Kohlenwasserstoffrest mit 4 bis 15 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder für einen araliphatischen Kohlenwasserstoffrest mit 7 bis 15 Kohlenstoffatomen steht, vorzugsweise ausgewählt aus der Gruppe bestehend aus Hexamethylendiisocyanat, 5-Isocyanato-1-(isocyanatomethyl)-1,3,3-trimethylcyclohexan, 2,6-Diisocyanatotoluol, 2,4-Diisocyanatotoluol und Tetramethylxylylendiisocyanat

oder deren Mischung;
die Diole b1) ausgewählt sind aus Polyesterdiolen, Polycarbonatdiolen und Polyetherdiolen; und die Verbindung c) ausgewählt ist aus Dihydroxycarbonsäuren, Diaminocarbonsäuren und Diaminosulfonsäuren.

**12.** Verfahren nach einem der Ansprüche 1 bis 8, **dadurch gekennzeichnet, dass** das Klebstoffpolymer ein Polymer ist, das herstellbar ist durch radikalische Emulsionspolymerisation von ethylenisch ungesättigten, radikalisch polymerisierbaren Monomeren umfassend

a) 60 bis 99,9 Gew.%, bezogen auf die Gesamtmenge an Monomeren, mindestens eines Monomeren ausgewählt aus der Gruppe bestehend aus C1- bis C20-Alkylacrylaten, vorzugsweise C1- bis C10-Alkylacrylaten, C1- bis C20-Alkylmethacrylaten, vorzugsweise C1- bis C10-Alkymethlacrylaten, Vinylaromaten mit bis zu 20 C-Atomen, vorzugsweise Styrol und
b) 0,1 bis 5 Gew.%, bezogen auf die Gesamtmenge an Monomeren, mindestens eines Monomeren mit mindestens einer Säuregruppe, ausgewählt aus Acrylsäure, Methacrylsäure und Itaconsäure und
c) 0 bis 10 Gew.%, bezogen auf die Gesamtmenge an Monomeren, an weiteren, von den Monomeren a) bis b) verschiedenen Monomeren, ausgewählt aus der Gruppe bestehend aus Acrylamid, Methacrylamid, N-Methylolacrylamid, N-Methylolmethacrylamid, Phenyloxyethylglykolmono(meth)acrylat, Hydroxylgruppen enthaltende Monomere, Aminogruppen enthaltende Monomere, Nitrile alpha,beta-monoethylenisch ungesättigter C3-C8-Carbonsäuren, bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen und vernetzende Monomere, welche mehr als eine radikalisch polymerisierbare Gruppe aufweisen.

**13.** Verfahren nach einem der Ansprüche 9 oder 12, **dadurch gekennzeichnet, dass** die Monomere a) in einer Menge von mindestens 80 Gew.%, bezogen auf die Gesamtmenge der Monomere, eingesetzt werden und ausgewählt sind aus der Gruppe bestehend aus C1- bis C10-Alkylacrylaten, C1- bis C10-Alkylmethacrylaten, Styrol und deren Gemisch; und die Monomer b) in einer Menge von 0,5 bis 5 Gew.%, bezogen auf die Gesamtmenge der Monomere, eingesetzt werden und ausgewählt sind aus der Gruppe bestehend aus Acrylsäure, Methacrylsäure, Itaconsäure und deren Gemisch.

**14.** Verfahren nach einem der vorhergehenden Ansprüche, **dadurch gekennzeichnet, dass** der Laminierklebstoff mindestens ein in der wässrigen Phase dispergiertes vernetzbares Klebstoffpolymer und mindestens einen reaktiven Vernetzer, vorzugsweise ein Polyisocyanat enthält.

**15.** Verfahren gemäß einem der vorhergehenden Ansprüche, **dadurch gekennzeichnet, dass** das Material der Trägerfolie ausgewählt ist aus der Gruppe bestehend aus Polyethylen, orientiertem Polypropylen, ungerecktem Polypropylen, Polyamid, Polyethylenterephthalat, Polyacetat, Zellglas.

**16.** Verwendung mindestens eines Polyalkylenglykols, ausgewählt aus Polyethylenglykol eines mittleren Molekulargewichts von 300 und bis zu 1500, vorzugsweise von 300 bis 600 und Polypropylenglykol eines mittleren Molekulargewicht von 300 und bis zu 2000, vorzugsweise von 300 bis 600, wobei die Molekulargewichte berechnet sind aus der OH-Zahl gemäß DIN 53240-3:2016-03,

bei der Herstellung von mit einem wässrigen Laminierklebstoff mittels eines Auftragsystems beschichteten Trägerfolien,
wobei das Auftragsystem ein Gravurwalzensystem ist, bei dem sich die zu beschichtende Trägerfolie zwischen zwei Walzen bewegt, die sich in der Richtung der sich bewegenden Trägerfolienbahn drehen, wobei eine der Walzen eine Gravurwalze ist und der Laminierklebstoff von der Gravurwalze auf die Trägerfolie aufgetragen wird, wobei die mit Klebstoff beschichtete Trägerfolie optional mit einem weiteren Substrat verklebt wird, wobei die Trägerfolie und/oder das optionale Substrat transparent sind.

## Claims

**1.** A process for film lamination, wherein an aqueous laminating adhesive is applied to a carrier film by means of an application system,

wherein the application system is a gravure roller system, wherein the carrier film to be coated moves between two rollers which rotate in the direction of the moving carrier film web, wherein one of the rollers is a gravure

roller and the laminating adhesive is applied to the carrier film by the gravure roller,
wherein the adhesive-coated carrier film is optionally bonded to a further substrate, wherein the carrier film and/or the optional substrate are preferably transparent or printed,
wherein the aqueous laminating adhesive comprises

(a) at least one adhesive polymer dispersed in the aqueous phase and
(b) at least one polyalkylene glycol dissolved in the aqueous phase, selected from polyethylene glycol, polypropylene glycol and a mixture thereof,

wherein
the polyethylene glycol has an average molecular weight from 300 and up to 1500 and the polypropylene glycol has an average molecular weight from 300 and up to 2000 and the molecular weights are calculated from the OH number according to DIN 53240-3:2016-03.

**2.** The process according to the preceding claim, wherein the articles produced by bonding to a second substrate are selected from composite films and glossy films.

**3.** The process according to the preceding claim, wherein the articles are composite films, wherein at least two films are bonded to one another using the aqueous dispersion adhesive composition, wherein at least one, preferably both films are transparent.

**4.** The process according to any of the preceding claims, wherein the polyalkylene glycols have a solubility in water of at least 10 g/l at 20°C.

**5.** The process according to any of the preceding claims, wherein the polyethylene glycol has an average molecular weight of 300 to 600 and wherein the polypropylene glycol has an average molecular weight of 300 to 600.

**6.** The process according to any of the preceding claims, wherein the laminating adhesive comprises

(i) from 30% to 60% by weight of the at least one adhesive polymer and
(ii) from 0.25% to 3% by weight of the at least one polyalkylene glycol dissolved in the aqueous phase.

**7.** The process according to any of the preceding claims, wherein the adhesive polymer has a glass transition temperature of -40°C to +15°C, preferably of -35°C to 0°C, measured by differential scanning calorimetry at a heating rate of 20°C/min.

**8.** The process according to any of the preceding claims, wherein the gravure roller is made of metal or ceramic, the second roller is a backing roller made of rubber or has a rubber surface,

the web speed of the carrier film during coating with adhesive is at least 50 m/min, preferably from 100 to 400 m/min and
the application quantity of the laminating adhesive is from 1 to 5 g/m$^2$.

**9.** The process according to any of the preceding claims, wherein the adhesive polymer is selected from polyurethanes and polymers producible by free-radical emulsion polymerization of ethylenically unsaturated, free-radically polymerizable monomers comprising

a) at least 60% by weight, based on the total amount of monomers, of at least one monomer selected from the group consisting of C1- to C20-alkyl acrylates, C1- to C20-alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers,
b)at least 0.1% by weight, based on the total amount of monomers, of at least one monomer having at least one acid group, preferably selected from the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate and mixtures of these monomers;
c)optionally at least one further monomer distinct from the monomers a) and b).

**10.** The process according to any of the preceding claims, wherein the adhesive polymer is a polyurethane constructed from

a) at least one monomeric diisocyanate,
b) at least one diol, of which
b1) 10 to 100 mol%, based on the total amount of the diols (b), have a molecular weight of 500 to 5000 g/mol and
b2) 0 to 90 mol%, based on the total amount of the diols (b), have a molecular weight of 60 to 500 g/mol,
c) at least one monomer distinct from the monomers (a) and (b) having at least one isocyanate group or at least one isocyanate-reactive group which further bears at least one hydrophilic group or a potentially hydrophilic group, and
d) optionally at least one further compound distinct from the monomers (a) to (c) having at least two reactive groups selected from alcoholic hydroxyl groups, primary or secondary amino groups or isocyanate groups, and
e) optionally at least one monofunctional compound distinct from the monomers (a) to (d) having a reactive group which is an alcoholic hydroxyl group, a primary or secondary amino group or an isocyanate group.

**11.** The process according to the preceding claim, wherein

the diisocyanates a) are selected from diisocyanates of the formula $X(NCO)_2$, wherein X represents an acyclic aliphatic hydrocarbon radical having 4 to 15 carbon atoms, a cycloaliphatic hydrocarbon radical having 6 to 15 carbon atoms, an aromatic hydrocarbon radical having 6 to 15 carbon atoms or an araliphatic hydrocarbon radical having 7 to 15 carbon atoms, preferably selected from the group consisting of hexamethylene diisocyanate, 5-isocyanato-1-(isocyanatomethyl)-1,3,3-trimethylcyclohexane, 2,6-diisocyanatotoluene, 2,4-diisocyanatotoluene and tetramethylxylylene diisocyanate or a mixture thereof;
the diols b1) are selected from polyester diols, polycarbonate diols and polyether diols;
and the compound c) is selected from dihydroxycarboxylic acids, diaminocarboxylic acids and diaminosulfonic acids.

**12.** The process according to any of claims 1 to 8, wherein the adhesive polymer is a polymer producible by free-radical emulsion polymerization of ethylenically unsaturated, free-radically polymerizable monomers comprising

a) 60% to 99.9% by weight, based on the total amount of monomers, of at least one monomer selected from the group consisting of C1- to C20-alkyl acrylates, preferably C1- to C10-alkyl acrylates, C1- to C20-alkyl methacrylates, preferably C1- to C10-alkyl methacrylates, vinylaromatics having up to 20 carbon atoms, preferably styrene, and
b) 0.1% to 5% by weight, based on the total amount of monomers, of at least one monomer having at least one acid group selected from acrylic acid, methacrylic acid and itaconic acid and
c)0% to 10% by weight, based on the total amount of monomers, of further monomers distinct from the monomers a) to b), selected from the group consisting of acrylamide, methacrylamide, N-methylolacrylamide, N-methylolmethacrylamide, phenyloxyethylglycol mono(meth)acrylate, hydroxyl-comprising monomers, amino-comprising monomers, nitriles, alpha, beta-monoethylenically unsaturated C3-C8-carboxylic acids, bifunctional monomers which comprise not only an ethylenically unsaturated double bond but also at least one glycidyl group, oxazoline group, ureido group or ureido-analogous group, and crosslinking monomers having more than one free-radically polymerizable group.

**13.** The process according to either of claims 9 and 12, wherein the monomers a) are employed in an amount of at least 80% by weight, based on the total amount of the monomers, and are selected from the group consisting of C1- to C10-alkyl acrylates, C1- to C10-alkyl methacrylates, styrene, and a mixture thereof; and the monomers b) are employed in an amount of 0.5% to 5% by weight, based on the total amount of the monomers, and are selected from the group consisting of acrylic acid, methacrylic acid, itaconic acid and a mixture thereof.

**14.** The process according to any of the preceding claims, wherein the laminating adhesive comprises at least one crosslinkable adhesive polymer dispersed in the aqueous phase and at least one reactive crosslinker, preferably a polyisocyanate.

**15.** The process according to any of the preceding claims, wherein the material of the carrier film is selected from the group consisting of polyethylene, oriented polypropylene, unoriented polypropylene, polyamide, polyethylene terephthalate, polyacetate, cellophane.

**16.** The use of at least one polyalkylene glycol selected from polyethylene glycol having an average molecular weight from 300 and up to 1500, preferably from 300 to 600, and polypropylene glycol having an average molecular weight from 300 and up to 2000, preferably from 300 to 600, wherein the molecular weights are calculated from the OH number according to DIN 53240-3:2016-03,

in the production of carrier films coated with an aqueous laminating adhesive using an application system, wherein the application system is a gravure roller system, wherein the carrier film to be coated moves between two rollers which rotate in the direction of the moving carrier film web, wherein one of the rollers is a gravure roller and the laminating adhesive is applied to the carrier film by the gravure roller, wherein the adhesive-coated carrier film is optionally bonded to a further substrate, wherein the carrier film and/or the optional substrate are transparent.

**Revendications**

**1.** Procédé de contrecollage de feuille, un adhésif aqueux de stratification étant appliqué sur une feuille support au moyen d'un système d'application,

le système d'application étant un système à cylindres de gravure, dans lequel la feuille support à revêtir se déplace entre deux cylindres qui tournent dans le sens vers la bande de feuille support qui se déplace, l'un des cylindres étant un cylindre de gravure et l'adhésif de stratification étant appliqué à partir du cylindre de gravure sur la feuille support,
la feuille support revêtue de l'adhésif étant éventuellement collée avec un autre substrat, la feuille support et/ou le substrat éventuel étant de préférence transparent(e) (s) ou imprimé(e) (s),
l'adhésif aqueux de stratification contenant

(a) au moins un polymère adhésif dispersé dans la phase aqueuse et
(b) au moins un polyalkylèneglycol dissous dans la phase aqueuse, choisi parmi le polyéthylèneglycol, le polypropylèneglycol et leur mélange,

**caractérisé en ce que** le polyéthylèneglycol présente un poids moléculaire moyen de 300 et jusqu'à 1500 et le polypropylèneglycol présente un poids moléculaire moyen de 300 et jusqu'à 2000 et les poids moléculaires étant calculés à partir de l'indice d'OH selon la norme 53240-3 : 2 0 16- 0 3 .

**2.** Procédé selon la revendication précédente, **caractérisé en ce que** les articles fabriqués par collage avec un deuxième substrat sont choisis parmi les feuilles composites et les feuilles brillantes.

**3.** Procédé selon la revendication précédente, **caractérisé en ce que** les articles sont des feuilles composites, au moins deux feuilles étant collées l'une avec l'autre à l'aide de la composition aqueuse d'adhésif de dispersion, au moins l'une, de préférence les deux feuilles étant transparentes.

**4.** Procédé selon l'une des revendications précédentes, **caractérisé en ce que** les polyalkylèneglycols présentent une solubilité dans l'eau d'au moins 10 g/l à 20°C.

**5.** Procédé selon l'une des revendications précédentes, **caractérisé en ce que** le polyéthylèneglycol présente un poids moléculaire moyen de 300 à 600 et **en ce que** le polypropylèneglycol présente un poids moléculaire moyen de 300 à 600.

**6.** Procédé selon l'une des revendications précédentes, **caractérisé en ce que** l'adhésif de stratification contient

(i) 30 à 60% en poids dudit au moins un polymère adhésif et
(ii) 0,25 à 3% en poids dudit au moins un polyalkylèneglycol dissous dans la phase aqueuse.

**7.** Procédé selon l'une des revendications précédentes, **caractérisé en ce que** le polymère adhésif présente une température de transition vitreuse de -40 à +15°C, de préférence de -35 à 0°C, mesurée par analyse calorimétrique différentielle à une vitesse de chauffage de 20°C/min.

**8.** Procédé selon l'une des revendications précédentes, **caractérisé en ce que**

le cylindre de gravure est en métal ou en céramique,
le deuxième cylindre est un cylindre de compression en caoutchouc ou présente une surface de caoutchouc,
la vitesse de la bande de la feuille support lors du revêtement par l'adhésif est d'au moins 50 m/min, de préférence de 100 à 400 m/min et
la quantité appliquée de l'adhésif de stratification est de 1 à 5 g/m$^2$.

**9.** Procédé selon l'une des revendications précédentes, **caractérisé en ce que** le polymère adhésif est choisi parmi les polyuréthanes et les polymères qui peuvent être préparés par polymérisation en émulsion par voie radicalaire de monomères éthyléniquement insaturés, polymérisables par voie radicalaire, comprenant

a) au moins 60% en poids, par rapport à la quantité totale de monomères, d'au moins un monomère choisi dans le groupe constitué par les acrylates de C1-C20-alkyle, les méthacrylates de C1-C20-alkyle, les esters vinyliques d'acides carboxyliques contenant jusqu'à 20 atomes de carbone, les aromatiques de vinyle comprenant jusqu'à 20 atomes de carbone, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères,
b) au moins 0,1 % en poids, par rapport à la quantité totale de monomères, d'au moins un monomère présentant au moins un groupe acide, de préférence choisi dans le groupe constitué par l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidométhylpropanesulfonique, l'acrylate de sulfopropyle, le méthacrylate de sulfopropyle et les mélanges de ces monomères ;
c) éventuellement au moins un autre monomère différent des monomères a) et b).

**10.** Procédé selon l'une des revendications précédentes, **caractérisé en ce que** le polymère adhésif est un polyuréthane qui est constitué par

a) au moins un diisocyanate monomère,
b) au moins un diol dont
b1) 10 à 100% en mole, par rapport à la quantité totale des diols (b), présentent un poids moléculaire de 500 à 5000 g/mole et
b2) 0 à 90% en mole, par rapport à la quantité totale des diols (b), présentent un poids moléculaire de 60 à 500 g/mole,
c) au moins un monomère différent des monomères (a) et (b), présentant au moins un groupe isocyanate ou au moins un groupe réactif vis-à-vis des groupes isocyanate, qui porte en outre au moins un groupe hydrophile ou un groupe potentiellement hydrophile et
d) éventuellement au moins un autre composé différent des monomères (a) à (c) présentant au moins deux groupes réactifs, qui sont choisis parmi les groupes hydroxyle alcoolique, les groupes amino primaire ou secondaire ou les groupes isocyanate et
e) éventuellement au moins un composé monovalent différent des monomères (a) à (d) présentant un groupe réactif, pour lequel il s'agit d'un groupe hydroxyle alcoolique, d'un groupe amino primaire ou secondaire ou d'un groupe isocyanate.

**11.** Procédé selon la revendication précédente, **caractérisé en ce que** les diisocyanates a) sont choisis parmi les diisocyanates de formule $X(NCO)_2$, X représentant un radical hydrocarboné aliphatique non cyclique comprenant 4 à 15 atomes de carbone, un radical hydrocarboné cycloaliphatique comprenant 6 à 15 atomes de carbone, un radical hydrocarboné aromatique comprenant 6 à 15 atomes de carbone ou un radical hydrocarboné araliphatique comprenant 7 à 15 atomes de carbone, de préférence choisis dans le groupe constitué par le diisocyanate d'hexaméthylène, le 5-isocyanato-1-(isocyanatométhyl)-1,3,3-triméthylcyclohexane, le 2,6-diisocyanatotoluène, le 2,4-diisocyanatotoluène et le diisocyanate de tétraméthylxylylène ou leur mélange ; les diols b1) sont choisis parmi les polyesterdiols, les polycarbonatediols et les polyétherdiols ; et le composé c) est choisi parmi les acides dihydroxycarboxyliques, les acides diaminocarboxyliques et les acides diaminosulfoniques.

**12.** Procédé selon l'une des revendications 1 à 8, **caractérisé en ce que** le polymère adhésif est un polymère qui peut être préparé par polymérisation en émulsion par voie radicalaire de monomères éthyléniquement insaturés, polymérisables par voie radicalaire, comprenant

a) 60 à 99,9% en poids, par rapport à la quantité totale de monomères, d'au moins un monomère choisi dans le groupe constitué par les acrylates de C1-C20-alkyle, de préférence les acrylates de C1-C10-alkyle, les

méthacrylates de C1-C20-alkyle, de préférence les méthacrylates de C1-C10-alkyle, les aromatiques de vinyle comprenant jusqu'à 20 atomes de carbone, de préférence le styrène,
b) 0,1 à 5% en poids, par rapport à la quantité totale de monomères, d'au moins un monomère présentant au moins un groupe acide, choisi parmi l'acide acrylique, l'acide méthacrylique et l'acide itaconique et
c) 0 à 10% en poids, par rapport à la quantité totale de monomères, d'autres monomères, différents des monomères a) à b), choisis dans le groupe constitué par l'acrylamide, le méthacrylamide, le N-méthylolacrylamide, le N-méthylolméthacrylamide, le de mono(méth)acrylate de phényloxyéthylglycol, les monomères contenant des groupes hydroxyle, les monomères contenant des groupes amino, les nitriles d'acides C3-C8-carboxyliques alpha,bêta-monoéthyléniquement insaturés, les monomères bifonctionnels, qui contiennent outre une double liaison éthyléniquement insaturée au moins un groupe glycidyle, oxazoline, uréido ou analogue à uréido et les monomères réticulants, qui présentent plus d'un groupe polymérisable par voie radicalaire.

**13.** Procédé selon l'une des revendications 9 ou 12, **caractérisé en ce que** les monomères a) sont utilisés en une quantité d'au moins 80% en poids, par rapport à la quantité totale des monomères et sont choisis dans le groupe constitué par les acrylates de C1-C10-alkyle, les méthacrylates de C1-C10-alkyle, le styrène et leur mélange ; et les monomères b) sont utilisés en une quantité de 0,5 à 5% en poids, par rapport à la quantité totale des monomères et sont choisis dans le groupe constitué par l'acide acrylique, l'acide méthacrylique, l'acide itaconique et leur mélange.

**14.** Procédé selon l'une des revendications précédentes, **caractérisé en ce que** l'adhésif de stratification contient au moins un polymère adhésif réticulable dispersé dans la phase aqueuse et au moins un réticulant réactif, de préférence un polyisocyanate.

**15.** Procédé selon l'une des revendications précédentes, **caractérisé en ce que** le matériau de la feuille support est choisi dans le groupe constitué par le polyéthylène, le polypropylène orienté, le polypropylène non étiré, le polyamide, le poly(téréphtalate d'éthylène), le polyacétate, le cellophane.

**16.** Utilisation d'au moins un polyalkylèneglycol, choisi parmi le polyéthylèneglycol d'un poids moléculaire moyen de 300 et jusqu'à 1500, de préférence de 300 à 600 et le polypropylèneglycol d'un poids moléculaire moyen de 300 et jusqu'à 2000, de préférence de 300 à 600, les poids moléculaires étant calculés à partir de l'indice d'OH selon la norme DIN 53240-3:2016-03,

lors de la fabrication de feuilles support revêtues d'un adhésif aqueux de stratification au moyen d'un système d'application,
le système d'application étant un système à cylindres de gravure, dans lequel la feuille support à revêtir se déplace entre deux cylindres qui tournent dans le sens vers la bande de feuille support qui se déplace, l'un des cylindres étant un cylindre de gravure et l'adhésif de stratification étant appliqué à partir du cylindre de gravure sur la feuille support, la feuille support revêtue de l'adhésif étant éventuellement collée avec un autre substrat, la feuille support et/ou le substrat éventuel étant transparent(e) (s) .

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9823656 A
- WO 0050480 A
- WO 2017102497 A
- JP 2016203119 A
- EP 622378 A
- US 3905929 A
- US 3920598 A
- DE 1495745 A
- US 3412054 A
- DE 3911827 A
- DE 2034479 A
- DE 1954090 B
- CA 1129128 A
- US 4269748 A
- US 4292226 A
- US 4192937 A


### In der Beschreibung aufgeführte Nicht-Patentliteratur


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- **J. BRANDRUP, E.H. IMMERGUT.** Polymer Handbook. J. Wiley, 1975
- **J. BRANDRUP, E.H. IMMERGUT.** Polymer Handbook. J. Wiley, 1989
- Ullmanns Enzyklopädie der technischen Chemie. vol. 19, 62-65
- *Ullmanns Enzyklopädie der technischen Chemie,* vol. 19, 311-313